(19) Europäisches Patentamt
European Patent Office
Office européen des brevets

(11) EP 2 445 839 B1

(12) **EUROPEAN PATENT SPECIFICATION**

(45) Date of publication and mention of the grant of the patent:
**15.02.2017 Bulletin 2017/07**

(21) Application number: **09786011.8**

(22) Date of filing: **09.07.2009**

(51) Int Cl.:
***C01G 51/00*** *(2006.01)*
***H01M 4/485*** *(2010.01)*
***H01M 4/525*** *(2010.01)*
***B82Y 30/00*** *(2011.01)*
***H01M 10/0525*** *(2010.01)*

(86) International application number:
**PCT/IB2009/006221**

(87) International publication number:
**WO 2010/150038 (29.12.2010 Gazette 2010/52)**

(54) **PARTICLES OF DOPED LITHIUM COBALT OXIDE, METHOD FOR PREPARING THE SAME AND THEIR USE IN LITHIUM ION BATTERIES**

PARTIKEL AUS DOTIERTEM LITIHIUM-COBALTOXID, VERFAHREN ZU IHRER HERSTELLUNG UND IHRE VERWENDLUNG FÜR LITHIUM-IONEN-BATTERIEN

PARTICULES D'OXYDE DE COBALT DOPE AU LITHIUM, LEUR PROCEDE DE PREPARATION ET LEUR UTILISATION DANS DES BATTERIES AU LITHIUM-ION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.06.2009 MA 32034**

(43) Date of publication of application:
**02.05.2012 Bulletin 2012/18**

(73) Proprietor: **Reminex Sa**
**BP 5199 Casablanca (MA)**

(72) Inventors:
- **AKALAY, Ismail**
  **Targa Marrakech 40000 (MA)**
- **BENZAKOUR, Intissar**
  **Targa Marrakech 40000 (MA)**
- **KADDAMI, Abderahmane**
  **Targa Marrakech 40000 (MA)**
- **FAQIR, Hakim**
  **Marrakech 40000 (MA)**
- **OUZAOUIT, Khalid**
  **Marrakech 400000 (MA)**

(74) Representative: **KATZAROV S.A.**
**European Patent Attorneys**
**19, rue des Epinettes**
**1227 Genève (CH)**

(56) References cited:
**JP-A- 10 001 316**
**US-A1- 2004 229 124**
**US-B1- 6 420 062**

- **NEEDHAM S A ET AL: "Synthesis and electrochemical performance of doped LiCoO2 materials" JOURNAL OF POWER SOURCES, ELSEVIER SA, CH, vol. 174, 3 July 2007 (2007-07-03), pages 828-831, XP002514971 ISSN: 0378-7753 [retrieved on 2007-07-03]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 445 839 B1

## Description

### Field of the invention

The present invention is in the filed of inorganic chemistry and in the field of electricity. More specifically the present invention provides the compounds containing metals used in processes and means for conversion of chemical into electrical energy.

### Discussion of the state of the art

Nowadays, lithium batteries are used principally as energy sources in telecommunications means (portable or cell phones, video cameras, portable computers, portable stereophonic equipment, pagers, facsimile devices, etc.). The principal advantages of lithium batteries are high energy density and long service life. The batteries have potential uses for a wide range of electrical systems, ranging from memory components for electronic apparatuses to electric vehicles.

Whereas the demand for electronic apparatuses in international markets is growing strongly, safety requirements are becoming more stringent. In this connection, research and development is proceeding aimed at introducing rechargeable lithium ion batteries into transportation means, particularly electric vehicles (Katz et al., U.S. Patent 6,200,704; Gao et al., U.S. Patent 6,589,499; Nakamura et al., U.S. Patent 6,103,213).

The qualities needed in lithium ion storage batteries for the major applications are:

- good energy storage;
- good thermal stability;
- good safety; and
- long service life.

The desirable qualities are greatly affected by the characteristics of the active materials used for the cathode and anode. In recent years, great progress has been made in anode materials. The set of problems relating to the cathode is still the subject of substantial research. The material most commonly used for the cathode is lithium cobalt oxide ($LiCoO_2$); however, alternative materials are used as well. $LiNiO_2$ would be a candidate also, because it has very high discharge capacity; however, its use has been impeded by serious problems relating to manufacturing difficulties and low thermal stability. $LiMnO_2$ is less expensive and is essentially environmentally benign; but as a practical matter it is not used, because of its low specific capacity.

Lithium cobalt oxide is widely used in batteries in commercially successful applications as a result of the high voltage of the batteries and the ease of their manufacture. Nonetheless, this material has drawbacks relating to storage capacity, namely:

- capacity fade rate with increasing numbers of cycles of charging/discharging; and
- poor energy storage at elevated temperatures (see Mao et al., U.S. Patent 5,964,902).

As a result a great amount of research has been devoted to alleviating these problems.

As a general requirement, a rechargeable battery must have high electrochemical capacity. In the case of a lithium ion battery, this can be achieved if the positive and negative electrodes can accommodate a large amount of lithium. In order to achieve long service life, the positive and negative electrodes should have sufficient lability to accommodate and release lithium in a reversible manner, i.e. they should have minimal "capacity fade". In this connection, the structural stability of the electrodes should be maintained during the deposition and extraction of lithium over a large number of cycles.

According to Needham (Needham, S.A., "Synthesis and electrochemical performance of doped LiCoO2 materials" (Ref. 1)), the choice of dopant and the amount of dopant are important factors in the improvement of the electrochemical performance of $LiCoO_2$ via suppression of anisotropic structural changes which can occur in the structure of the lithium cobalt oxide.

Further, the physicochemical properties of $LiCoO_2$ which is commonly used as a positive electrode material in lithium ion batteries tend to depend on the preparation method, the choice of precursors and the conditions of preparation. The control of these parameters has effects on the particle size distribution, and on the morphology and purity of the cobalt oxide (see Lundblad, A. and Bergman, (Ref. 2); and Lala, S.M. et al., (Ref. 9)).

JP 10 001316 A (SAKAI CHEMICAL INDUSTRY CO) aims to obtain multiple oxide particle suitable for a positive electrode activating material for Li ion secondary battery by dispersing cobalt hydroxide being trivalent cobalt oxyhydroxide and a specific compound into a lithium hydroxide aqueous liquid and rejecting to heat treatment. At least one kind between cobalt and cobalt hydroxide oxyhydroxide, each having trivalent valency and a compound at least one

kind element among B, Mg, Si, Cu, Cy, Y, Ti, V, Mn, Fe, Ni, Sn, Zr, Sb, Nb, Ru, Pb, Hf, Ta, La, Pr, and Nd are dispersed into the Li hydroxide aqueous liquid and heated to obtain the object complex oxide particles. The Li-Co multiple oxide particle is submicron size and has narrow particle distribution, large specific surface area and a uniform composition.

US 6,420,062 B1 (PROHASKA ARMIN et al) relates to a double layer cathode for molten carbonate fuel cells, containing a first layer (2a) consisting of a first cathode material, preferably lithium-treated nickel oxide, and a second layer (2b) consisting of cerium-activated lithium cobaltite. The double layer cathode is characterised in that the polarization resistance is less dependent on temperature and in that it has a longer life. The double layer cathode is especially suitable for operating a fuel cell at less than 650 DEG C. The material for the second cathode layer (2b) is produced by activating cobalt oxide by co-precipitation with cerium and treating it with lithium carbonate to form a suspension. Said suspension is then applied to the first cathode layer (2a) as a second cathode (2b), dried and sintered at a high temperature.

With the aim of stabilizing the crystalline structure of the lithium cobaltate and to improve the properties of the material, inter alia its characteristics during the charging/discharging cycle, incorporation of magnesium into the lithium cobalt oxide lattice was studied (Maeda et al., U.S. 7,192,539; andAntolini, E. et al., (Ref.3)).

According to the invention made by A. Masashi and al. (Japan patent application No. 08 - 171755, (1998)), several chemical trivalent elements were used as doping agent in the cobalt lithium oxide in order to obtain compositions of uniform size distribution and morphology.

A large number of similar studies have been conducted, studying the effect of doping with different elements (particularly, transition elements) on the electrochemical performance of batteries using such compounds in the cathode. Lithium cobalt oxides doped with manganese and titanium have been studied and considered as promising materials for cathodes of storage batteries (see Kumar et al., U.S. Patent 6,749,648).

According to the work of Needham, S.A. (Ref. 1), doping with tetravalent elements is more promising than with divalent or trivalent elements. Dong Zhang (Dong Zhang et al., (Ref. 10)) showed that doping of lithium cobalt oxide with chromium provides an initial capacity of 230 mAh/g.

According to Jang (Jang, S.W. et al., (Ref. 4)), the structural stability of lithium cobalt oxide, which crystallizes in the hexagonal system, greatly influences the electrochemical performance. It was concluded that the phase transition from hexagonal to monoclinic during cycling of the battery is the cause of the loss in capacity of batteries using lithium cobalt oxide.

In the invention it is proposed to remediate these problems by providing nano-particles for use in the manufacture of cathodes of rechargeable lithium batteries in order to obtain enhanced energy storage, high thermal stability and very high charge / discharge capacities compared to the known conventional lithium ion batteries.

**Summery of the invention**

The object of the present invention has been achieved by the Applicants by providing particles of doped lithium cobalt oxide of formula $LiCo_yO_z \cdot t\ MO_x$, wherein the doping agent $MO_x$ is selected from the group of lanthanide oxides, wherein the molar ratios expressed by y, z, t and x are selected so as to produce desired stoichiometric ratios in said particles of doped lithium cobalt oxide, and wherein said doping agent $MO_x$ is nano-sized whereas the molar ratio y of cobalt is y = 1 - t and the molar ratio t of the doping agent $MO_x$ is in the range of 0.005 to 0.3, the molar ratio z of oxygen is such as to ensure electric neutrality of said particles of doped lithium cobalt oxide and the molar ratio x of oxygen is from 0.7 to 1.1.

The present invention also provides a cathode for lithium ion batteries comprising the particles of doped lithium cobalt oxide according to the invention as an active electrochemical material.

In this context, a further object of the present invention is to provide a lithium ion battery comprising at least one negative electrode, at least one positive electrode, and at least one separation electrolyte, wherein the positive electrode comprises the cathode according to the invention.

Other objects of the present invention are to provide a method of improving the stability and storage capacity of rechargeable lithium ion batteries and to provide a method of producing particles of doped lithium cobalt oxide according to the invention.

Other characteristics and advantages of the invention will be apparent from the description which follows herein below. The accompanying Figures are offered solely for purposes of example.

**Brief description of the Figures**

**Figure 1** shows the crystalline structure of the $CeO_2$ lattice;

**Figure 2 (a and b)** is simplified flow chart of the method of preparation;

**Figure 3** shows charge and discharge capacities of $LiCo_yO_z$, 0.02 $CeO_x$ without nano-sized cerium oxide.

**Figure 4** shows XDR diffraction patterns of the synthesized cerium oxide: a) microscopic $CeO_2$; b) nanoscopic $CeO_{2-\delta}\square_\delta$ (D : Oxygen vacancies)

**Figure 5** shows the charging and discharging curves for lithium cobalt oxide sample combined with nano-sized cerium oxide.

**Figure 6** shows (DSC) measurements of $LiCo_yO_z$, 0.02 $CeO_x$ : a) microscopic $CeO_2$, b) nanoscopic $CeO_2$.

**Figure 7** shows XDR diffraction patterns of $LiCo_yO_z$, 0.02 $CeO_x$: a) microscopic $CeO_2$; b) nanoscopic $CeO_{2-\delta}\square_\delta$.

**Figure 8** shows SEM photograph of microscopic $LiCo_yO_z$, 0.02 $CeO_x$

**Figure 9** shows SEM photograph of nanoscopic $LiCo_yO_z$, 0.02$CeO_x$

**Detailed description of the invention**

Although methods and materials similar or equivalent to those described herein can be used in the practice or testing of the present invention, suitable methods and materials are described below. The publications and applications discussed herein are provided solely for their disclosure prior to the filing date of the present application. Nothing herein is to be construed as an admission that the present invention is not entitled to antedate such publication by virtue of prior invention. In addition, the materials, methods, and examples are illustrative only and are not intended to be limiting.

Novel cathode materials for rechargeable batteries are produced by a novel method which consists of doping lithium cobalt oxide with the aim of improving its electrochemical performance and its safety characteristics. These characteristics are of particular and critical importance in order to fulfill the increasing needs in energy especially on an industrial scale.

The invention relates to novel particles of doped lithium cobalt oxide of formula $LiCo_yO_z \cdot t\ MO_x$ wherein the doping agent $MO_x$ is selected from the group of lanthanide oxides, wherein the molar ratios expressed by y, z, t and x are selected so as to produce desired stoichiometric ratios in said particles of doped lithium cobalt oxide and wherein said doping agent $MO_x$ is nano-sized whereas the molar ratio y of cobalt is y = 1 - t and the molar ratio t of the doping agent $MO_x$ is in the range of 0.005 to 0.3, the molar ratio z of oxygen is such as to ensure electric neutrality of said particles of doped lithium cobalt oxide and the molar ratio x of oxygen is from 0.7 to 1.1.

The terms "nano-sized" or "nanoscopic" or "nanoparticles" or "nanoscale", used interchangeably herein, define controlled geometrical size of particles below 100 nanometers (nm) (see "Nanotechnology and patents", EPO 2009, http://www.epo.org/about-us/publications/general-information/nanotechnology.html)

The originality of the invention lies in the fact that such doping by nano-sized lanthanide oxide group dopants has never been previously envisioned and especially it has never been studied as to the nano-structural properties and the resulting electrochemical properties of the lithium cobalt oxide. Merely it has been known that the lanthanides (rare earths) have exceptional properties which have been exploited to great advantage in numerous industrial sectors.

The invention relates particularly to the study of combining the impact of doping by lanthanide oxides of exceptional properties and effect of crystallites size of doping compound especially at form of nanoscale particles, in the absence of any indications in the literature of the implications of such doping.

The rare earths (lanthanides) (e.g. Ce, La, Nd, Eu) comprise 15 scarce elements of atomic numbers in the range 57-71 (lanthanum to lutetium), having similar chemical properties. They comprise the 15 members of the "internal transition series" in Mendeleev's table of the elements.

Preferably, the doping agent $MO_x$ in the doped lithium cobalt oxide is selected from the group consisting of oxides of Nd, Eu, Sm, Ce, Tb, and / or combinations thereof.

In the inventive particles of doped lithium cobalt oxide ($LiCo_yO_z \cdot t\ MO_x$), the preferable values of the molar ratios are:

$$0.7 \leq x \leq 1.1$$

$$0.005 \leq t \leq 0.3, \text{ more preferably } 0.01 \leq t \leq 0.2$$

$$1.55 \leq z \leq 1.993$$

$$y = 1 - t$$

The molar ration x of Oxygen content in the lattice of the lanthanide oxide depends on the non stoichiometric behavior of nano-sized lanthanide oxide. The molar ratio z of Oxygen in lithium cobalt oxide is such as to ensure electrical neutrality of the particles.

In particular, the molar ratio z (or index) depends on the molar ratio t for the dopant, and an increased t essentially increases z; since the doping causes structural vacancies in the structure of lithium cobalt oxide. In practice, the value (molar ratio) of z will be in the range of $1.55 \leq z \leq 1.993$.

According to a preferred embodiment of the invention, the doping agent $MO_x$ is cerium (Ce) oxide (ceria).

Most preferably, the formula for the doped lithium cobalt oxide particles is $LiCo_{0.98}O_{1.97}{\cdot}0.02CeO_x$

Surprisingly, the choice of nano-sized cerium oxide as a doping agent has demonstrated exceptional properties. Cerium oxide is a compound which has recently been the subject of much study for potential uses in numerous industrial sectors. This interest is explained by the following:

- Cerium oxide is characterized by high structural and thermal stability (it crystallizes into a fluorine-type structure, and does not undergo a phase transition until its fusion point $T_f$ of 2750°K);
- It has lability such that it acts as an "oxygen reservoir"; this property is known as "OSC" (oxygen storage capacity);
- It has mixed electrical conductivity (electronic and ionic).

Cerium dioxide, $CeO_2$, commonly called ceria, crystallizes in a structure of the fluorine type ($CaF_2$), in the space group Fm3m, over a wide range of temperatures up to its fusion temperature (M. Mogensen et al., (Ref. 5)).

The crystalline structure of this oxide is presented in Figure 1. Cerium dioxide is characterized by, inter alia, its non-stoichiometric behavior, which allows it to serve as a reservoir of oxygen, which has effects on the mixed electrical conductivity properties (electronic and ionic) of this oxide. A summary of physical properties of cerium oxide is presented in Tables 1 and 2.

Table 1: Physical properties of cerium dioxide

| **Crystallographic data** | **$CeO_2$** |
|---|---|
| Crystalline system | Cubic |
| Space group | Fm3m |
| Lattice parameter (nm) | 0,5411 |
| Asymmetric units | Ce (0,0,0)<br>O (1/4,1/4,1/4) |
| Inter-reticular distances which relate to the most intense bands (nm) | $d_{111}$=0,312<br>$d_{110}$=0,383 |

Table 2: Physical properties of cerium dioxide

| **Property** | **value** |
|---|---|
| Density | 7,22 $g/cm^3$ |
| Fusion temperature | 2750 K |
| Thermal conductivity | 12 $W.m^{-1}.K^{-1}$ |
| Specific heat | 460 $J.Kg^{-1}.K^{-1}$ |
| Young's modulus | $165.10^9$ $N.m^{-1}$ |

The advantage provided by introduction of an oxygen reservoir into the structure of lithium cobalt oxide may lie in the fact that, when $CeO_2$ is reduced to $CeO_{2-x}$, defects appear in the form of $Ce^{3+}$ ions (indicated as $Ce'_{Ce}$ in the notation of Kröger and Vink), wherewith the $Ce^{3+}$ has a charge which is negative with respect to the $Ce^{4+}$ of the normal lattice of $CeO_2$. It is generally accepted that the principal means by which the oxygen vacancies in $CeO_{2-x}$ are compensated for is the creation of $Ce'_{Ce}$ defects (Zhu, T. et al., (Ref. 7); Trovarelli, A. et al., (Ref. 8) and I. Akalay et al, (Ref. 11)).

The process of reduction of $CeO_2$ is represented as follows:

$$O_O \quad + 2\ Ce_{Ce} \longrightarrow \frac{1}{2}\ O_2\,(\text{gaz}) + \ V_{\ddot{O}} \ + \ 2\ Ce'_{Ce}$$

wherein :

$Ce_{Ce}$ : represents the cerium present in the normal $CeO_2$ lattice,

$O_0$: represents an oxygen in the normal ceria lattice: namely an ion $O^{2-}$

$V_{\ddot{o}}$ : represents an oxygen vacancy

The introduction of these oxygen vacancies can both improve the electrical properties of the material by introducing of oxygen species with high mobility, to better adapt to the fluctuations of oxygen taking place and furthermore to promote textural stability of systems based on cobalt lithium oxide and therefore the introduction of nano-sized cerium oxide in the development of electrochemically active compounds have a double effect:

- Improve the safety aspect by the restitution of oxygen released resulting from the interactions between cathode - electrolyte.
- Improve the charge / discharge capacities compared to conventional products based on lithium cobalt oxide, the second advantage is provided by the introduction of new mobile species that lead to the improvement of electrical transport properties and the subsequent electrochemical performance in terms of charge / discharge capacities. The mobility of these oxygen species is becoming more important when miniaturizing the average size of crystallites to the nano - scale.

Indeed, studies show that the transition from micro - size to a nano - size (average size of crystallites smaller than 100 nm) has a great influence on the physical and chemical properties of materials. These variations in properties can be explained by the number of surface atoms greater than 70% compared to the number of atoms in volume for the nanoscale materials, resulting in an exceptional improvement of all the phenomena of surface compared to conventional materials (microscopic scale) (N.G.Millot (Ref. 14)).

Carrying out electrochemically active systems involving a cathode whit an average crystallite size falls belonging to the nano - field and the combination with the effects resulting in integration of a catalytic phase has never been studied, according to our knowledge.

In this context the present invention deals with proving that the performance of these new systems in terms on the safety aspect and charge / discharge capacities are greatly improved compared to conventional products (microscopic scale).

The particles of $LiCo_yO_z$ in doped lithium cobalt oxide according to the invention have a mean diameter of preferably ≤ 200 nm, more preferably ≤ 180 nm (see Example 2).

The particles of $MO_x$ have a mean diameter less than or equal to 50 nm.

The particles of doped lithium cobalt oxide according to the invention also have difference between the charging and discharging capacity of < 0.3%. Preferably, the specific discharge capacity of the particles is ≥ 165 mAh/g.

The particles of doped lithium cobalt oxide according to the invention show a high structural stability and have been characterization by various techniques.

The electrochemical characteristics displayed by these materials demonstrate that doping by nano-sized rare earth oxides, particularly cerium oxide, confers upon the material an improved charging/discharging capacity compared to materials based on lithium cobalt oxide which have been studied in the literature. Furthermore, the small capacity loss between the charging/discharging cycles which is one of the characteristic of materials according to the present invention means that they have a high reversibility in battery cycling, and long life, which makes them excellent candidates for use in storage battery technology (secondary batteries).

According to the invention it is proposed to provide a cathode (positive electrode) as an active electrochemical material for lithium ion batteries (also called rechargeable electrochemical lithium batteries), wherein said cathode comprises the particles of doped lithium cobalt oxide according to the present invention.

In particular, the particles of doped lithium cobalt oxide according to the present invention may be used for the manufacture of cathodes of lithium ion rechargeable batteries.

For example, an electrode according to the invention comprises a conductive support serving as a power collector which is coated by the electrochemically active material (particles) according to the invention, and further comprises a binder and a conductive material.

The power collector is preferably a two-dimensional conductive support, such as a solid strip of material or perforated strip of material, which is containing carbon or metal, e.g. copper, aluminum, nickel, steel, or stainless steel. Preferably, a positive electrode comprises a collector in aluminum. In the event of excessive discharging or inversion of the battery, one thus avoids short-circuiting by dendrites of copper (which might occur if the collector is in copper).

The binder may contain one or more of the following compounds: polyvinylidene fluoride (PVDF) and its copolymers, polytetrafluoroethylene (PTFE), polyacrylonitrile (PAN), polymethyl methacrylate, polybutyl methacrylate, polyvinyl chloride (PVC), polyvinyl formal, block polyester amides and polyether amides; polymers of acrylic acid, acrylamide, itaconic acid, and sulfonic acid; elastomers; and cellulosic compounds.

Among the numerous elastomers which may be used are: ethylene-propylene-diene rubber (EPDM), styrene-butadiene rubber (SBR), acrylonitrile-butadiene rubber (NBR), styrene-butadiene-styrene block copolymers (SBS), styrene-acrylonitrile-styrene block copolymers (SIS), styrene-ethylenebutylene-styrene copolymers (SEBS), styrene-butadiene-vinylpyridine terpolymers (SBVR), polyurethanes (PUR), neoprenes, polyisobutylenes (PIB), and butyl rubbers; and mixtures of these.

The cellulosic compound may be chosen among for example carboxymethylcellulose (CMC), hydroxypropylmethylcellulose (HPMC), hydroxypropylcellulose (HPC), or hydroxyethylcellulose (HEC).

The conductor material may be chosen among graphite, carbon black, 15 acetylene black (AB), or derivatives and/or mixtures thereof.

It is another object of the present invention to provide a lithium ion battery (also know as secondary or storage battery) comprising at least one negative electrode, at least one positive electrode, and at least one separation electrolyte; wherein the positive electrode comprises the cathode according to the present invention.

Preferably the separation electrolyte is a liquid, a gel, or a solid. More preferably, the electrolyte is chosen among a non-aqueous electrolyte comprising a lithium salt dissolved in a solvent; and a polymeric solid conductive electrolyte which is an ionic conductor of lithium ions, e.g. polyethylene oxide (PEO).

The lithium salt is chosen among lithium perchlorate ($LiClO_4$), lithium hexafluoroarsenate ($LiAsF_6$), lithium hexafluorophosphate ($LiPF_6$), lithium tetrafluoroborate ($LiBF_4$), lithium trifluoromethanesulfonimide ($LiN(CF_3SO_2)_2$) (LiTFSI), lithium trifluoroethanesulfonemethide ($LiC(CF_3SO_2)_3$) (LiTFSM), and lithium bisperfluoroethylsulfonimide ($LiN(C_2F_5SO_2)_2$) (BETI); and mixtures thereof.

Preferably, the solvent is a solvent or mixture of solvents, chosen among usual or customary organic solvents, particularly: saturated cyclic carbonates, unsaturated cyclic carbonates, non-cyclic carbonates, alkyl esters (such as formiates, acetates, propionates, or butyrates), ethers, lactones (such as gamma-butyrolactone), tetrahydrothiophene dioxide (commercialized as SULFOLANE), nitrile solvents; and mixtures of these. Among the cyclic saturated carbonates which might be mentioned are: ethylene carbonate (EC), propylene carbonate (PC), and butylene carbonate (BC); and mixtures of these. Among the cyclic unsaturated carbonates which might be mentioned are, e.g., vinylene carbonate (VC), and its derivatives; and mixtures of these. Among the non-cyclical carbonates which might be mentioned are, e.g.: dimethyl carbonate (DMC), diethyl carbonate (DEC), methyl ethyl carbonate (EMC), and dipropyl carbonate (DPC); and mixtures of these. Among the alkyl esters which might be mentioned are, e.g.: methyl acetate, ethyl acetate, methyl propionate, ethyl propionate, butyl propionate, methyl butyrate, ethyl butyrate, and propyl butyrate; and mixtures of these. Among the ethers which might be mentioned are, e.g., dimethyl ether (DME) and diethyl ether (DEE); and mixtures thereof. Other solvents which might be mentioned are 1,2-dimethoxyethane, 1,2-diethoxyethane, 2-methyltetrahydrofuran, and 3-methyl-1,3-dioxolane.

In general, the negative electrode comprises a conductor support serving as a power collector, which is coated with a layer comprising the electrochemically active material and further comprising a binder and a conductive material. The collector of this negative electrode may be made of copper or nickel, advantageously copper. The electrochemically active material is chosen among metallic lithium, lithium alloys, a carbon material wherein lithium can be inserted in the structure (e.g. graphite, coke, carbon black, or vitreous carbon), and a mixed oxide of lithium and a transition metal such as nickel, cobalt, or titanium.

Generally, improved electrochemical performance of rechargeable batteries involves an elevated reversibility of the process of intercalation and de-intercalation of $Li^+$ in the battery, which results in a low difference between the charging and discharging capacities (Levasseur, Stéphane (Ref. 6)).

A major problem faced by investigators and industrial exploiters is the operational safety of rechargeable batteries. Without adequate safety, the range of applications is limited. This applies in particular to the use of advanced rechargeable batteries in electrical and hybrid vehicles. Safety is a factor of major concern in addition to high ratings in

capacity per unit weight and per unit volume, and in service life.

Generally, the battery safety tests comprise three steps:

- Progressive increasing of the potential difference between anode and cathode;
- Heating of the battery to a maximum temperature prescribed for the safety testing;
- Perforation, by prescribed means. Three sets of data are recorded, namely the potential difference (Volts), temperature (°C), and power (Amps).

Example 2 demonstrates that the safety of the batteries according to the invention is much better than that of standard commercial lithium cobalt batteries.

The Applicants have shown that the temperature increase compared to the increase with standard $LiCoO_2$ batteries is minor. In particular, the temperature increase with the lithium ion battery according to the invention in classical safety tests is less than 15°C (generally in the range +7°C to +15°C). The doped material of the present invention leads to a temperature increase which is slightly more than half that of a battery using non-doped lithium cobalt oxide.

The lithium ion battery according to the present invention have the specific discharge capacities of cobalt lithium oxide doped with nano-sized ceria greater or equal to 165 mAh/g.

The lithium ion battery according to the present invention generates heat of less than 50 J/g.

The invention additionally proposes a method of improving the stability and storage capacity of rechargeable lithium ion batteries wherein, the positive electrode (cathode) of said batteries comprises the particles of doped lithium cobalt oxide according to the invention as the active electrochemical material.

Another object of the invention is a method of producing the particles of doped lithium cobalt oxide $LiCo_yO_z \cdot t\ MO_x$ according to the invention. This method comprises:

a) the preparation of nano-sized doping agent $MO_x$ (lanthanide oxide) comprising the steps of:

(i) obtaining $MO_x$ precursor starting from acetate or nitrate of lanthanide by co-precipitation or sol-gel method,
(ii) calcinating $MO_x$ precursor to obtain nano-sized $MO_x$ having a controlled crystallites size,

b) the preparation of $LiCo_yO_z$ particles comprising mixing of cobalt oxide $Co_3O_4$ with lithium carbonate $Li_2CO_3$ to obtain a homogenous $LiCo_yO_z$ particles,

and wherein said particles of doped lithium cobalt oxide $LiCo_yO_z \cdot t\ MO_x$ are obtained by:

1) mixing the $LiCo_yO_z$ particles of step b) with the nano-sized $MO_x$ of step a.ii),
2) homogenizing and milling of the mixture of step 1), and
3) calcinating the result of step 2) at temperatures in the range of 600°C to 1200°C.

Additives may be used in step 1) and mixed together with $LiCo_yO_z$ particles and nano-sized $MO_x$ to influence the size and shape of the particles according to the invention. Several additives were studied, especially of organic nature such as acetone or PVA.

Preferably the calcination of step a.ii) is carried out at temperatures in the range of 450°C to 700°C; the calcination of step 3), is carried out at temperatures in the range of 600°C to 1200°C during a time comprised in the range of 3 to 40 hours.

Co- precipitation method:

a) The starting materials, such as nitrates of cerium hexahydrate, are dissolved in distilled water (in the case of nitrates).
b) A precipitating agent for co-precipitation is added under stirring until a determined value of pH (5-12).
c) The obtained precipitate is then subjected to successive steps of washing with deionized water in order to remove residual trace of the precipitation agent.
d) Then, the washed precipitate is dried at temperature ranging from to 80 to 130°C.
e) The dried precipitate ($MO_x$ precursor) is calcinated to obtain nano-sized $MO_x$ (lanthanide oxide) particles having a controlled crystallites size.

Sol - gel method:

This method involves:

a) Dissolution of lanthanide acetate, such as cerium acetate, in appropriate medium (acetic acid). The obtained sol is continuously stirred.
b) A precipitating agent is added until formation of gel for a value of pH varying between 5 and 12.
c) The obtained gel is dried at temperature varying between 50°C and 100°C.
d) The dried gel ($MO_x$ precursor) is calcinated to obtain nano-sized $MO_x$ (lanthanide oxide) particles having a controlled crystallites size.

The above-mentioned precipitating agent may be $NH_4OH$ solution or any other suitable solution known to the person skilled in the art.
In a preferred embodiment of the invention, the chosen lanthanide oxide is cerium oxide.
The invention further proposes to provide particles of doped lithium cobalt oxide of formula $LiCo_yO_z \cdot t\ MO_x$ obtainable according to the method of the present invention, wherein the doping agent $MO_x$ being selected from the group of lanthanide oxides, the molar ratios expressed by y, z, t and x are selected so as to produce desired stoichiometric ratios in said particles of doped lithium cobalt oxide, and wherein doping agent $MO_x$ is nano-sized.
The originality of this invention is that for the first time it is proved that the particles of doped lithium cobalt oxide with nano-sized doping agent exhibit exceptional properties compared to conventional products whose average particle size exceeds 100 nm. The particles of doped lithium cobalt oxide ($LiCo_yO_z \cdot t\ MO_x$) of the present invention are developed based on two components:

(1) the particles of $LiCo_yO_z$ having a mean diameter less than or equal to 200 nm, and (2) the particles of doping agent $MO_x$ have a mean diameter less than or equal to 50 nm. The combination of theses two components leads to the electrochemically active particles having:

- High thermal stability reflecting improved safety aspect compared to the conventional products made of lithium cobalt oxide,
- Very high charge / discharge capacities (about 165 mAh / g).

Those skilled in the art will appreciate that the invention described herein is susceptible to variations and modifications. The invention also includes all of the steps, features and compounds referred to or indicated in this specification, individually or collectively, and any and all combinations or any two or more of said steps or features. The present disclosure is therefore to be considered as in all aspects illustrated and not restrictive, the scope of the invention being indicated by the appended Claims.
Other characteristics and advantages of the invention will be apparent from the following exemplary embodiments, which are presented for purposes of example and do not limit the scope of the invention, and in the accompanying Figures.

**Examples**

(1) Experimental method:

The particles produced were identified with the use of an "Xpert" X-ray diffractometer. In this connection, the lattice parameters were calculated and refined with the use of a program based on the method of least squares.
The mean lattice size of the crystallites of the particles used as cathode materials was calculated from the X-ray diffraction spectra, using the Scheerer formula:

$$D = \frac{k\ .\lambda}{\beta\ .\cos\ \theta}$$

where

k is the shape factor (≈ 0.9 if the width is half the height);
D is the mean lattice parameter of the crystallites (Å);

$\lambda$ is the wavelength of the incident beam (Å); and
$\beta$ is the width at half height, corrected by an apparatus factor relating to the broadening of the diffraction rays.

References for the Scheerer formula:

- Muller, C., (Ref. 15);
- Millot, N.G., (Ref. 14).

The morphology of the produced samples was characterized with the use of a scanning electron microscope.
The electrochemical performance of the batteries was evaluated by tests on batteries comprising the cathode (using the particles according to the invention) and an anode, separated by an electrolyte.
The safety of synthesized particles was evaluated using differential scanning Calorimetry (DSC).

**Example 1**

This example illustrates the structural properties of cerium oxide crystallites, which have a nanoscopic size compared to microscopic cerium oxide sample.
The preparation of cerium oxide can be achieved through co-precipitation process or a sol-gel route. The starting material can be acetates or nitrates of cerium. The precipitating agent consisting of $NH_4OH$ solution is added to the nitrate or acetate cerium solution until a pH reaches a value varying between 9 and 11. The obtained precipitate ($CeO_2$ precursor) is then washed to remove residual $NH^{4+}$ ions. Drying is then carried out at optimum temperature. Calcinations allow thereafter obtaining nano crystallites cerium oxide. The desired average size of crystallites is governed by the choice of temperature and the duration of calcinations (K. Ouzaouit, and al., (Ref. 12)). Calcining temperature ranges from 450°C to 700°C according to the co-precipitation or sol-gel process route, the precursors used and the desired size.
The average size of crystallites estimated according to the semi - empirical relationship:

$$D = D_0 \exp(-E_a/k_B T)$$

where $E_a$ is the activation energy of crystallization, $k_B$ the Boltzmann constant and Do the pre-exponential factor. The D size tends to infinity for a temperature near the melting temperature of $CeO_2$ at 2750°K (S. Saitzek, (Ref. 16)).
Figure 4 shows the X-ray patterns of two samples of cerium oxide prepared: a) of microscopic crystallites size, b) nanoscopic crystallites size.
The identification of the two samples is carried out by comparing experimental data to reference ones which are the JCPDS file. This study shows that the diffraction lines are characteristic of pure cerium oxide, in accordance with the standard JCPDS file (34 - 0394) for both samples a) and b). There is also a peak broadening observed for a produced sample b). This strong increase of the peak width is explained generally by two effects: the size of crystallites or micro-strains in the lattice. In the Applicants' case, the expansion is mainly attributed to the average crystallites size.
Table 1 lists the average crystallites size of synthesized cerium oxide prepared in the nanoscopic form compared to a microscopic sample and their refined cells parameters.

Table 1: Cell Parameters and average crystallite size of synthesized microscopic and nanoscopic cerium oxide

| | Microscopic sample « $CeO_2$ » **(a)** | Nanoscopic ceria « $CeO_{2-\delta}\square_\delta$ » **(b)** |
|---|---|---|
| *Cell parameter* **a (Å)** | **5.405 ± 0.002** | **5.391 ± 0.005** |
| *Cell volume* **V(Å$^3$)** | **157.9 ± 0.1** | **156.7 ± 0.4** |
| *Avearage cristallites size **(nm)*** | **162.2 ± 0.1** | **32.4 ± 0.1** |

The Applicants note that the cell parameters of different synthesized cerium oxide samples nanoscopic and microscopic size are in perfect agreement with those of literature.
Procedure for obtaining cerium oxide having a controlled average crystallite size was carried out through specifically choice of elaboration parameters (see above-mentioned co-precipitation and sol-gel methods). Controlling preparation conditions allow not only to control the average crystallites size but also allow to control a non-stoichiometry oxygen ($0.05 < \delta < 0.2$).
This non- stoichiometric behavior in oxygen amount contained in the prepared cerium oxide is the source of catalytic properties as a reservoir of oxygen that can present this material.

The prepared nano-sized cerium oxide according to the method of the present invention (having the average crystallite size of about 32nm, as presented in Table 1) is used in the method of producing the particles of doped lithium cobalt oxide of formula $LiCo_yO_z \cdot t\ MO_x$ for performing electrochemically active cathode and safe compared to conventional products.

**Example 2:**

The second example presents results corresponding to two samples of cobalt lithium oxide prepared with micro-sized and nano-sized cerium oxides as described in Example 1.

The particles of doped lithium cobalt oxide were prepared in order to have a formula ($LiCo_yO_z$, 0.02 $CeO_x$) chosen after a series of tests, the coefficients x, y and z chosen were the same for both samples prepared from synthesized cerium oxide referenced by a) (microscopic) and b) (nanoscopic) in the first example.

Several samples were synthesized with different values of x, y and z varying within defined ranges as claimed in the present invention. These samples have been subjected to different characterizations, such as structural and electrochemical performance, which allowed the selection of the preferred particles of doped lithium cobalt oxide for use according to the present invention.

The method used to prepare particles of dopes lithium cobalt oxide ($LiCo_yO_z$, 0.02 $CeO_x$) in form of nanoparticles implies a solid - state reaction adopting a specific thermal treatments and using a specific additional in mixture with starting precursors consisting in cobalt lithium oxide and different synthesized cerium oxide as described in example 1.

The homogenization of precursors used in the preparation of the electrochemically active phase is achieved via the addition of a specific organic additive. The purpose of this additional organic product was to have composites presenting highly homogeneous morphologies.

1- Structural characterisation

Figure 7 shows X - Ray patterns of dopes lithium cobalt oxide ($LiCo_yO_z$, 0.02 $CeO_x$). As already mentioned above, the choice of $LiCo_yO_z$, 0.02 $CeO_x$ was achieved after several series of tests whose results showed that $LiCo_yO_z$, 0.02 $CeO_x$ present the stoechiometry leading to a best structural performance and consequently electrochemical ones.

X - Rays patterns of $LiCo_yO_z$, 0.02 $CeO_x$ (Figure 7) shows in addition to the diffraction lines attributed to cobalt lithium oxide, additional peaks assigned to cerium oxide. In order to obtain the best performances, the amount of residual cerium oxide in the doped lithium cobalt oxide is optimized. Indeed, the amount of cerium oxide was chosen to be greater than the limit of a solid solution $LiCo_yO_z$ - $CeO_x$ with a well determined quantity. Table 2 lists the average crystallites size of synthesized doped lithium cobalt oxides based on cobalt lithium oxide and cerium oxide.

Table 2: Cell Parameters and average crystallites size of synthesized doped lithium cobalt oxide based on cobalt lithium oxide and microscopic or nanoscopic cerium oxide

| Structural parameter | $LiCo_yO_z$, 0.02 $CeO_x$ « Microscopic » (a) | $LiCo_yO_Z$, 0.02 $CeO_{2-\delta}\square_\delta$ « Nanoscopic » (b) |
|---|---|---|
| Structural ordering factor | R = 0.52 | R = 0.46 |
| Cell parameter (Å) | a = 2.813 ± 0.001<br>c = 14.042 ± 0.001 | a= 2.806 ± 0.005<br>c = 13.996 ± 0.002 |
| Cell volume (Å$^3$) | V = 96.2 ± 0.5 | V = 96.1 ± 0.3 |
| Average cristallites size (nm) | D = 173.7 ± 0.2 | D = 89.2 ± 0.3 |
| c/a | 4.99 | 4.99 |

By analyzing results listed in Table 2, one can conclude that cells parameters of all the doped lithium cobalt oxides containing microscopic and nanoscopic cerium oxide (a) and (b) are in good agreement with literature data. The factor describing crystalline order of the sample prepared using nanosized cerium oxide is lower than that synthesized via microscopic cerium oxide and thereafter the lithium cobalt oxide particles doped by the nano-sized cerium oxide exhibit a more ordered crystalline structure. One recall that the factor reflecting the crystalline disorder is defined by:

$\mathrm{R} = \frac{I(102) + I(006)}{I(101)}$ where I (102), I (006) and I (101) are respectively the intensities of diffraction peaks (102), (006) and (101). However, as well as the value of R factor characteristic of crystalline disorder decreases, the order

crystalline becomes better.

The average crystallites size of lithium cobalt oxide is much lower in the case when doped by nanoscopic (b) compared to the microscopic cerium oxide (a).

2 - Morphological characterization of ($LiCo_yO_z$, 0.02 $CeO_x$ wherein $CeO_x$ is nano-sized

Figures 8 and 9 show the morphological characterization achieved by scanning electron microscopy of $LiCo_yO_z$, 0.02 $CeO_x$ particles having micro-sized or nano-sized cerium oxide. The images show that the morphologies of those two types of particles are homogeneous, the coalescence of grains exhibiting a well determined sides. The $LiCo_yO_z$, 0.02 $CeO_x$ particles, prepared with cerium oxide microscopic or nanoscopic, present regular forms (pseudo hexagonal) which reflects a better microstructural organization of the system. The particles having microscopic cerium oxide exhibit a quite variable grains size (Figure 8). The presence of porosity is quite noticeable in the sample prepared with nanoscopic cerium oxide, as seen in Figure 9.

3 - Electrochemical performance:

Figures 3 and 5 show the curves of charge / discharge capacities for the designed batteries manufactured based on particles whose synthesis and characterization have been described in example 2.

Both particles exhibit better electrochemical performance, i.e. the charge / discharge capacities of about 150mAh / g for the particles containing non-nanoscopic cerium oxide and the capacities exceeding 165 mAh / g for the particles containing nanoscopic cerium oxide. The obtained discharge capacities for both particles are higher than the value of non-doped lithium cobalt oxide samples (140 mAh/g).

The synthesized doped lithium cobalt oxide containing nano-sized cerium oxide leads to an excellent improvement of discharge capacity of about 12% compared to the conventional products. This phenomena can be interpreted by the introduction of new oxygen species in the lattice of cobalt lithium oxide attributed to the non- stoichiometric behavior regarding oxygen and the increased mobility of these species. This property generates the production of oxygen species type responsible for the improvement of electrical transport properties. The chemical reaction describing the creation of these species (A. Trovarelli, Ref. 8):

$$O_{2ads} \xrightarrow{+e^-} O^-_{2ads} \xrightarrow{+e^-} O^{2-}_{2ads} \rightleftharpoons 2O^-_{ads} \underset{-2e^-}{\overset{+2e}{\rightleftharpoons}} 2O^{2-}_{lattice}$$

Consequently the electrochemical properties show a good improvement as a result of combining the two effects: introduction of catalytic product to the electrochemical system and synthesis of nanoscale electrochemically active materials.

Synthesis of electrochemical system for rechargeable batteries in form of nanoscale crystallites present a key factor to a significant enhancement in terms of charge/discharge capacities.

4 - Safety of $LiCo_yO_z$, 0.02 $CeO_x$ particles

The operational safety of rechargeable batteries continues to be the main challenge for researchers and industrial users. Safety is so important because insufficient safety limits the use of advanced rechargeable batteries in numerous applications, particularly electric and hybrid vehicles.

Lamellar oxides such as lithium cobalt oxide tend to release oxygen when they are highly delithiated during the charging process or when they are subjected to constrained thermal conditions. The mechanism of degradation of the lithium ion battery can be explained by the reaction between oxygen released from the oxide forming the cathode and the electrolyte. In other words the combustion of organic solvents in the presence of oxygen is the origin of the exothermic reactions observed by differential scanning calorimetry (DSC), for example an organic solvent of general formula $C_xH_yO_z$ may be oxidized in the presence of $O_2$ and release heat energy in the future according to the reaction: $C_xH_yO_z + (2x+y/2-z)/2O_2 \rightarrow xCO_2 + y/2H_2O$.

This type of reaction is very exothermic and is activated by heat and presence of oxygen. There are several techniques for safety inspection of lithium ion batteries such as:

1- Nail - penetration
2- Crush
3- Dropping from height of 1.5 m.

4- Heat evolution (DSC).

Differential scanning calorimetry can detect the thermal effects (endo or exothermic phenomena) occurring during a transformation or a structural transition. The used measure consists in determining ΔH enthalpy (the quantity may be positive or negative) when the material is subjected to temperature change perfectly linear with time.

Regarding safety characterization of rechargeable lithium ion, two quantities are essential and provide an indication of the thermal behavior of the rechargeable battery, namely:

- $T_{on}$ set temperature (° C): indicates the start of the reaction between the electrolyte and cathode. More the value of this temperature is high; the better is thermal stability of battery.
- ΔH (j / g): is the energy released during the reaction electrolyte - cathode; lower this value is, the cathode becomes more stable - concerning reactivity with the electrolyte.

Figure 6 shows the characterization by differential calorimetry (DSC) of particles based on lithium cobalt oxide and cerium oxide prepared in the form of nanoscopic and microscopic scale respectively. The main information's that can be drawn from the analysis of Figure 6 are listed in Table 3.

Table 3: (DSC) measurements of $LiCo_yO_z$, 0.02 $CeO_x$: a) nanosized, b) microsized.

| Sample | Onset Temperature (°C) | ΔH area (J/g) |
|---|---|---|
| $LiCo_yO_2$ - 0.02 $CeO_x$ $CeO_x$ microsized | 240 | 191 |
| $LiCo_yO_2$ - 0.02 $Ce\square_\delta O_{2-\delta}$ $Ce\square_\delta O_{2-\delta}$ nanosized | 228 | 35.6 |
| Literature (Ref. 13) | 176 LiCoO2 | 2102 |

In order to prove the originality of using nanoscopic cerium oxide in doped lithium cobalt oxide particles as electrochemically active cathode presenting high performance, the characterization of the safety aspect of the particles (using microscopic and nanoscopic cerium oxide) shows that reducing the size at the nanoscale form leads to an excellent improvements in terms of thermal stability of electrochemical active systems based on cobalt lithium oxide as seen in Figure 6.

The heat energy released by marketed lithium cobalt oxide is: $LiCoO_2$ (4.2 V) = - 770 j/g. Compared to the marketed lithium cobalt oxide, it can be noticed that $LiCo_xO_2$ - 0.02 $CeO_x$ particles having microscopic cerium oxide exhibit a marked decrease of about 4 times regarding liberated heat. A significant decrease of the heat energy released during the reaction between cathode and electrolyte of about 22 times for the particles having nanoscopic cerium oxide compared to the marketed ones. In the light of these results, it can be concluded that the particles with nanoscopic cerium oxide leads to an excellent thermal stability and consequently to a high safety compounds for cathodes of rechargeable batteries.

Another potential feature of the particles of doped lithium cobalt oxide of the present invention is the temperature of starting reactivity ($T_{on\ set}$) of the cathode with the electrolyte, which exhibits a net increase of 30% compared to marketed products which reflects another excellent performance related to a safety of the particles of the present invention.

It goes without saying that the present invention is not limited in scope to the described embodiments but extends to numerous variants accessible to one skilled in the art. In particular it is within the scope of the invention to employ a conductive electrode support of a different nature and structure than described. Further, various ingredients may be employed in preparing the homogeneous paste, in various proportions. In particular, various additives may be used which facilitate forming of the electrode, such as thickeners and texture stabilizers.

References

1 - « Synthesis and electrochemical performance of doped LiCoO2 materials », S.A.Needham et al., Journal of Power Sources (2007).

2 - « Synthesis of LiCoO2 starting from carbonate precursors», A.Lundblad, B.Bergman, Solid State Ionics 96 (1997) 173 - 181

3 - « Synthesis and Thermal Stability of LiCoO2», E.Antolini et al., Journal of Solid State Chemistry 117, 1-7 (1995)

4 - «Synthesis and electrochemical of LixCoO2 for lithium - ion batteries », Serk-Won Jang et al. Materials and Research Bulletin 38 (2003) 1- 9

5 - « Physical, chemical and electrochemical properties of pure and doped ceria», M.Mogensen, N.Sammes, G.A.Tompsett, Solid State Ionics 129 (2000) 63-94.
6 - Stéphane LEVASSEUR, Doctoral dissertation, université de Bordeaux I, 2001.
7 - « Redox chemistry over CeO2-based catalysts: SO2 reduction by CO or CH4», T.Zhu, L.Kundakovic, A.Dreher, M.F.Stephanopoulos Catalysis Today 50 (1999) 381-397.
8 - « Catalytic Properties of Ceria and CeO2-Containing Materials», A.Trovarelli, Rev 38 (1996) 439 - 450.
9 - «Synthesis of LiCoO2 by metallo-organic decomposition-MOD», S.M.Lala et al., Journal of Power Sources 114 (2003) 127 - 132.
10 - « Dong Zhang et al., Journal of Power Sources 83 (1999) 121 -127 »
11 - I.Akalay et al, J. Chem. Soc., Faraday Trans. 1, 1987, 83, 1137 -1148
12 - K. Ouzaouit, and al. Journal de Physique IV, (2005), Volume 123, Issue 1, pp.125 -130
13 - Y-K.Sun, S-W.Cho, S-T.Myung, K.Amine, Jai.Prakash, Electrochimica Acta 53(2007) 1013-1019
14 - N.G.Millot, thesis, University of Borgogne (1998)
15 - Muller, C., 1996, thesis, Joseph Fourier University, Grenoble
16 - S. Saitzek, Thesis University of south Toulon Var (2003)

## Claims

**1.** Particles of doped lithium cobalt oxide of formula

$$LiCo_yO_z \cdot t\ MO_x$$

wherein the doping agent $MO_x$ is selected from the group of lanthanide oxides, and wherein the molar ratios expressed by y, z, t and x are selected so as to produce desired stoichiometric ratios in said particles of doped lithium cobalt oxide, **characterized in that** said doping agent $MO_x$ is nano-sized and wherein the molar ratio y of cobalt is y = 1 - t and the molar ratio t of the doping agent $MO_x$ is in the range of 0.005 to 0.3, the molar ratio z of oxygen is such as to ensure electric neutrality of said particles of doped lithium cobalt oxide and the molar ratio x of oxygen is from 0.7 to 1.1.

**2.** Particles of doped lithium cobalt oxide according to claim 1, **characterized in that** the doping agent $MO_x$ is selected from the group consisting of oxides of Nd, Eu, Sm, Ce, Tb, and / or combinations thereof.

**3.** Particles of doped lithium cobalt oxide according to any of claims 1 to 2, **characterized in that** the doping agent $MO_x$ is cerium (Ce) oxide.

**4.** Particles of doped lithium cobalt oxide according to any of claims 1 to 3, **characterized in that** the molar ratio t of the doping agent $MO_x$ is in the range of 0.01 to 0.2.

**5.** Particles of doped lithium cobalt oxide according to claims 1 to 4, **characterized in that** the molar ratio z of oxygen is in the range of 1.55 to 1.993.

**6.** Particles of doping agent according to claims 1 to 5, **characterized in that** the molar ratio y of cobalt is 0.98.

**7.** Particles of doped lithium cobalt oxide according to claims 1 to 6, **characterized in that** the particles consist in $LiCo_{0.98}O_{1.97}$, 0.02 $CeO_x$.

**8.** Particles of doped lithium cobalt oxide according to any of claims 1 to 7, **characterized in that** the particles of $LiCo_yO_z$ have a mean diameter less than or equal to 200 nm.

**9.** Particles of doped lithium cobalt oxide according to any of claims 1 to 7, **characterized in that** the particles of $LiCo_yO_z$ have a mean diameter less than or equal to 180 nm.

**10.** Particles of doped lithium cobalt oxide according to any of claims 1 to 9, **characterized in that** the particles of doping agent $MO_x$ have a mean diameter less than or equal to 50 nm.

**11.** Particles of doped lithium cobalt oxide according to any of claims 1 to 10, **characterized in that** the difference between the charging and discharging capacity is less than 0.3%.

**12.** A cathode for lithium ion batteries comprising the particles of doped lithium cobalt oxide according to any of claims 1 to 11 as an active electrochemical material.

**13.** Use of the particles of doped lithium cobalt oxide according to any of claims 1 to 11, for manufacture of cathodes for rechargeable lithium ion batteries.

**14.** A lithium ion battery comprising at least one negative electrode, at least one positive electrode, and at least one separation electrolyte, **characterized in that** the positive electrode comprises the cathode according to claim 12.

**15.** The lithium ion battery according to claim 14, **characterized in that** the separation electrolyte is a liquid, a gel, or a solid.

**16.** The lithium ion battery according to any of claims 14 to 15, **characterized in that** the specific discharge capacities of cobalt lithium oxide doped with nanosized ceria is greater or equal to 165 mAh/g.

**17.** The lithium ion battery according to any of claims 14 to 16, **characterized in that** said battery generates heat of less than 50 J/g.

**18.** A method of improving the stability and storage capacity of rechargeable lithium ion batteries, **characterized in that** the positive electrode in said batteries comprises the particles of doped lithium cobalt oxide according to any of claims 1 to 11 as an active electrochemical material.

**19.** A method of producing particles of doped lithium cobalt oxide $LiCo_yO_z{\cdot}t\ MO_x$ according to any of claims 1 to 11, said method comprises:

a) the preparation of nano-sized doping agent $MO_x$ (lanthanide oxide) comprising the steps of:

i. obtaining $MO_x$ precursor starting from acetate or nitrate of lanthanide by co-precipitation or sol-gel method,
ii. calcinating $MO_x$ precursor at temperatures in the range of 450°C to 700°C to obtain nano-sized $MO_x$ having a controlled crystallites size,

b) the preparation of $LiCo_yO_z$ particles comprising mixing of cobalt oxide $Co_3O_4$ with lithium carbonate $Li_2CO_3$ to obtain a homogenous $LiCo_yO_z$ particles,

and wherein said particles of doped lithium cobalt oxide $LiCo_yO_z{\cdot}t\ MO_x$ are obtained by:

1) mixing the $LiCo_yO_z$ particles of step b) with the nano-sized $MO_x$ of step a.ii),
2) homogenizing and milling of the mixture of step 1), and
3) calcinating the result of step 2) at temperatures in the range of 600°C to 1200°C.

**20.** The method of claim 19, **characterized in that** additives are mixed together with $LiCo_yO_z$ particles and nano-sized $MO_x$ in step 1).

**21.** The method of claim 19, **characterized in that** the calcination step 3), is carried out during a time comprised in the range of 3 to 40 hours.

**Patentansprüche**

**1.** Partikel aus dotiertem Lithiumkobaltoxid der Formel

$$LiCo_yO_z{\bullet}t\ MO_x$$

worin die Dotierungssubstanz $MO_x$ aus der Gruppe der Lanthanidenoxide ausgewählt wird, und worin die durch y, z, t und x ausgedrückten Molverhältnisse so gewählt sind, um gewünschte stöchiometrische Verhältnisse in den Partikeln aus dotiertem Lithiumkobaltoxid zu erzielen, **dadurch gekennzeichnet, dass** die besagte Dotierungssubstanz $MO_x$ Nanogrösse aufweist, und worin das Molverhältnis y von Kobalt y = 1 - t ist, und das Molverhältnis t der Dotierungssubstanz $MO_x$ im Bereich von 0.005 bis 0.3 liegt, das Molverhältnis z von Sauerstoff derart ist, um

die elektrische Neutralität der besagten Partikel aus dotiertem Lithiumkobaltoxid zu gewährleisten, und das Molverhältnis x von Sauerstoff 0,7 bis 1,1 ist.

2. Partikel aus dotiertem Lithiumkobaltoxid gemäss Anspruch 1, **dadurch gekennzeichnet, dass** die Dotierungssubstanz $MO_x$ aus der Gruppe bestehend aus Oxiden von Nd, Eu, Sm, Ce, Tb und/oder Kombinationen davon ausgewählt wird.

3. Partikel aus dotiertem Lithiumkobaltoxid gemäss irgendeinem der Ansprüche 1 bis 2, **dadurch gekennzeichnet, dass** die Dotierungssubstanz $MO_x$ Cerium (Ce)-Oxid ist.

4. Partikel aus dotiertem Lithiumkobaltoxid gemäss irgendeinem der Ansprüche 1 bis 3, **dadurch gekennzeichnet, dass** das Molverhältnis t der Dotierungssubstanz $MO_x$ im Bereich von 0,01 bis 0,2 liegt.

5. Partikel aus dotiertem Lithiumkobaltoxid gemäss den Ansprüchen 1 bis 5, **dadurch gekennzeichnet, dass** das Molverhältnis z von Sauerstoff im Bereich von 1,55 bis 1,993 liegt.

6. Partikel aus Dotierungssubstanz gemäss den Ansprüchen 1 bis 5, **dadurch gekennzeichnet, dass** das Molverhältnis y von Kobalt 0,98 beträgt.

7. Partikel aus dotiertem Lithiumkobaltoxid gemäss den Ansprüchen 1 bis 6, **dadurch gekennzeichnet, dass** die Partikel aus $LiCo_{0.98}O_{1.97}$, 0.02 $CeO_x$ bestehen.

8. Partikel aus dotiertem Lithiumkobaltoxid gemäss irgendeinem der Ansprüche 1 bis 7, **dadurch gekennzeichnet, dass** die Partikel aus $LiCo_yO_z$ einen mittleren Durchmesser von weniger als oder gleich 200nm aufweisen.

9. Partikel aus dotiertem Lithiumkobaltoxid gemäss irgendeinem der Ansprüche 1 bis 7, **dadurch gekennzeichnet, dass** die Partikel au $LiCo_yO_z$ einen mittleren Durchmesser von weniger als oder gleich 180nm aufweisen.

10. Partikel aus dotiertem Lithiumkobaltoxid gemäss irgendeinem der Ansprüche 1 bis 9, **dadurch gekennzeichnet, dass** die Partikel der Dotierungssubstanz MOx einen mittleren Durchmesser von weniger als oder gleich 50nm aufweisen.

11. Partikel aus dotiertem Lithiumkobaltoxid gemäss irgendeinem der Ansprüche 1 bis 10, **dadurch gekennzeichnet, dass** der Unterschied zwischen der Lade- und Entlade-Kapazität weniger als 0,3% beträgt.

12. Kathode für Lithium-Ionen-Batterien, mit den Partikeln aus dotiertem Lithiumkobaltoxid gemäss irgendeinem der Ansprüche 1 bis 11 als aktives elektrochemisches Material.

13. Verwendung der Partikel aus dotiertem Lithiumkobaltoxid gemäss irgendeinem der Ansprüche 1 bis 11 zur Herstellung von Kathoden für wiederaufladbare Lithium-Ionen-Batterien.

14. Lithium-Ionen-Batterie mit mindestens einer negativen Elektrode, mindestens einer positiven Elektrode, und mindestens einem Trennelektrolyt, **dadurch gekennzeichnet, dass** die positive Elektrode die Kathode gemäss Anspruch 12 umfasst.

15. Lithium-Ionen-Batterie gemäss Anspruch 14, **dadurch gekennzeichnet, dass** der Trennelektrolyt eine Flüssigkeit, ein Gel oder ein Feststoff ist.

16. Lithium-Ionen-Batterie gemäss irgendeinem der Ansprüche 14 bis 15, **dadurch gekennzeichnet, dass** die spezifischen Entladekapazitäten von mit Nano-Cerdioxid dotiertem Kobalt-Lithiumoxid grösser als oder gleich 165 mAh/g ist.

17. Lithium-Ionen-Batterie gemäss irgendeinem der Ansprüche 14 bis 16, **dadurch gekennzeichnet, dass** die besagte Batterie Wärme von weniger als 50 J/g erzeugt.

18. Verfahren zur Verbesserung der Stabilität und Erhöhung der Speicherkapazität von wiederaufladbaren Lithium-Ionen-Batterien, **dadurch gekennzeichnet, dass** die positive Elektrode in den besagten Batterien die Partikel aus dotiertem Lithiumkobaltoxid gemäss irgendeinem der Ansprüche 1 bis 11 als ein aktives elektrochemisches Material

umfasst.

**19.** Verfahren zur Herstellung von Partikeln aus dotiertem Lithiumkobaltoxid $LiCo_yO_z \cdot t\ MO_x$ gemäss irgendeinem der Ansprüche 1 bis 11, wobei das besagte Verfahren umfasst:

a) die Zubereitung einer Dotierungssubstanz $MO_x$ (Lanthanidenoxide) in Nanogrösse mit den folgenden Schritten:

i) Erhalten vom $MO_x$-Vorprodukt aus Lanthanidenazetat oder -nitrat mittels Mitfällungs- oder Sol-Gel-Verfahren,
ii) Kalzinieren vom $MO_x$-Vorprodukt bei Temperaturen im Bereich von 450°C bis 700°C, um $MO_x$ in Nanogrösse mit einer kontrollierten Kristallitgrösse zu erhalten,

b) die Zubereitung von $LiCo_yO_z$-Partikeln, umfassend das Mischen von Kobaltoxid $Co_3O_4$ mit Lithiumkarbonat $Li_2CO_3$, um homogene $LiCo_yO_z$-Partikel,

und wobei besagte Partikel aus dotiertem Lithiumkobaltoxid $LiCo_yO_z \cdot t\ MO_x$ erhalten werden durch:

1) Mischen der $LiCo_yO_z$-Partikel aus dem Schritt b) mit dem $MO_x$ in Nanogrösse aus dem Schritt a.ii),
2) Homogenisieren und Mahlen der Mischung aus dem Schritt 1), und
3) Kalzinieren des Ergebnisses vom Schritt 2) bei Temperaturen im Bereich von 600°C bis 1200°C.

**20.** Verfahren gemäss Anspruch 19, **dadurch gekennzeichnet, dass** Zusatzstoffe zusammen mit $LiCo_yO_z$-Partikeln und $MO_x$ in Nanogrösse im Schritt 1) vermischt werden.

**21.** Verfahren gemäss Anspruch 19, **dadurch gekennzeichnet, dass** der Kalzinierungsschritt 3) während einer Zeitspanne im Bereich von 3 bis 40 Stunden ausgeführt wird.

## Revendications

**1.** Particules d'oxyde de cobalt dopé au lithium de la formule

$$LiCo_yO_z \cdot t\ MO_x$$

l'agent de dopage $MO_x$ étant sélectionné parmi le groupe d'oxydes de lanthanides, et les rapports molaires exprimés par y, z, t et x étant sélectionnés de sorte à produire des rapports stoechiométriques souhaités dans lesdites particules d'oxyde de cobalt dopé au lithium, **caractérisées en ce que** ledit agent de dopage $MO_x$ est nanométrique et où le rapport molaire y du cobalt est y = 1 - t et le rapport molaire t de l'agent de dopage $MO_x$ est de l'ordre de grandeur de 0.005 à 0.3, le rapport molaire z d'oxygène est tel à assurer la neutralité électrique desdites particules d'oxyde de cobalt dopé au lithium et le rapport molaire x d'oxygène est de 0,7 à 1,1.

**2.** Particules d'oxyde de cobalt dopé au lithium selon la revendication 1, **caractérisées en ce que** l'agent de dopage $MO_x$ est sélectionné parmi le groupe consistant en oxydes de Nd, Eu, Sm, Ce, Tb et/ou leurs combinaisons.

**3.** Particules d'oxyde de cobalt dopé au lithium selon l'une quelconque des revendications 1 à 2, **caractérisées en ce que** l'agent de dopage $MO_x$ est l'oxyde de cérium (Ce).

**4.** Particules d'oxyde de cobalt dopé au lithium selon l'une quelconque des revendications 1 à 3, **caractérisées en ce que** le rapport molaire t de l'agent de dopage $MO_x$ est de l'ordre de grandeur de 0,01 à 0,2.

**5.** Particules d'oxyde de cobalt dopé au lithium selon les revendications 1 à 4, **caractérisées en ce que** le rapport molaire z d'oxygène est de l'ordre de grandeur de 1,55 à 1,993.

**6.** Particules d'agent de dopage selon les revendications 1 à 5, **caractérisées en ce que** le rapport molaire y de cobalt est 0,98.

**7.** Particules d'oxyde de cobalt dopé au lithium selon les revendications 1 à 6, **caractérisées en ce que** les particules

consistent en $LiCo_{0.98}O_{1.97}$, 0.02 $CeO_x$.

**8.** Particules d'oxyde de cobalt dopé au lithium selon l'une quelconque des revendications 1 à 7, **caractérisées en ce que** les particules de $LiCo_yO_z$ ont un diamètre moyen inférieur ou égal à 200nm.

**9.** Particules d'oxyde de cobalt dopé au lithium selon l'une quelconque des revendications 1 à 7, **caractérisées en ce que** les particules de $LiCo_yO_z$ ont un diamètre moyen inférieur ou égal à 180nm.

**10.** Particules d'oxyde de cobalt dopé au lithium selon l'une quelconque des revendications 1 à 9, **caractérisées en ce que** les particules de l'agent de dopage $MO_x$ ont un diamètre moyen inférieur ou égal à 50nm.

**11.** Particules d'oxyde de cobalt dopé au lithium selon l'une quelconque des revendications 1 à 10, **caractérisées en ce que** la différence entre la capacité de charge et de décharge est de moins de 0,3%.

**12.** Cathode pour batteries lithium-ion comprenant les particules d'oxyde de cobalt dopé au lithium selon l'une quelconque des revendications 1 à 11, comme matériau électrochimique actif.

**13.** Utilisation de particules d'oxyde de cobalt dopé au lithium selon l'une quelconque des revendications 1 à 11, pour la fabrication de cathodes pour batteries lithium-ion rechargeables.

**14.** Batterie lithium-ion comprenant au moins une électrode négative, au moins une électrode positive et au moins un électrolyte de séparation, **caractérisée en ce que** l'électrode positive comprend la cathode selon la revendication 12.

**15.** Batterie lithium-ion selon la revendication 14, **caractérisée en ce que** l'électrolyte de séparation est un liquide, un gel, ou un solide.

**16.** Batterie lithium-ion selon la revendication 14 ou 15, **caractérisée en ce que** la capacité de décharge spécifique d'oxyde de lithium-cobalt dopé aux nanoparticules de céria est supérieure ou égale à 165 mAh/g.

**17.** Batterie lithium-ion selon l'une quelconque des revendications 14 à 16, **caractérisée en ce que** ladite batterie génère de la chaleur de moins de 50 J/g.

**18.** Procédé pour améliorer la stabilité et la capacité de stockage d'une batterie lithium-ion rechargeable, **caractérisé en ce que** l'électrode positive dans lesdites batteries comprend les particules d'oxyde de cobalt dopé au lithium selon l'une quelconque des revendications 1 à 11 comme matériau électrochimique actif.

**19.** Procédé pour la production de particules d'oxyde de cobalt dopé au lithium $LiCo_yO_z$•t $MO_x$ selon l'une quelconque des revendications 1 à 11, ledit procédé comprenant :

a) la préparation d'agent de dopage $MO_x$ (oxyde de lanthanide) nanométrique comprenant les étapes de :

i) obtention du précurseur $MO_x$ à partir d'acétate ou de nitrate de lanthanide par co-précipitation ou procédé sol-gel,
ii) calcination du précurseur $MO_x$ à des températures de l'ordre de grandeur de 450°C à 700°C pour obtenir du $MO_x$ nanométrique ayant une taille de cristallite contrôlée,

b) la préparation de particules de $LiCo_yO_z$ comprenant le mélange d'oxyde de cobalt $Co_3O_4$ avec du carbonate de lithium $Li_2CO_3$ afin d'obtenir des particules $LiCo_yO_z$ homogènes,

et où lesdites particules d'oxyde de cobalt dopé au lithium $LiCo_yO_z$•t $MO_x$ étant obtenues par:

1) le mélange des particules $LiCo_yO_z$ de l'étape b) avec le $MO_x$ nanométrique de l'étape a.ii),
2) l'homogénéisation et la mouture du mélange de l'étape 1), et
3) la calcination du résultat de l'étape 2) à des températures de l'ordre de 600°C à 1200°C.

**20.** Procédé selon la revendication 19, **caractérisé en ce que** des additifs sont mélangés avec les particules de $LiCo_yO_z$ et le $MO_x$ nanométrique au cours de l'étape 1).

**21.** Procédé selon la revendication 19, **caractérisé en ce que** l'étape de calcination 3) est effectuée durant un laps de temps de l'ordre de 3 à 40 heures.

**Fig. 1**

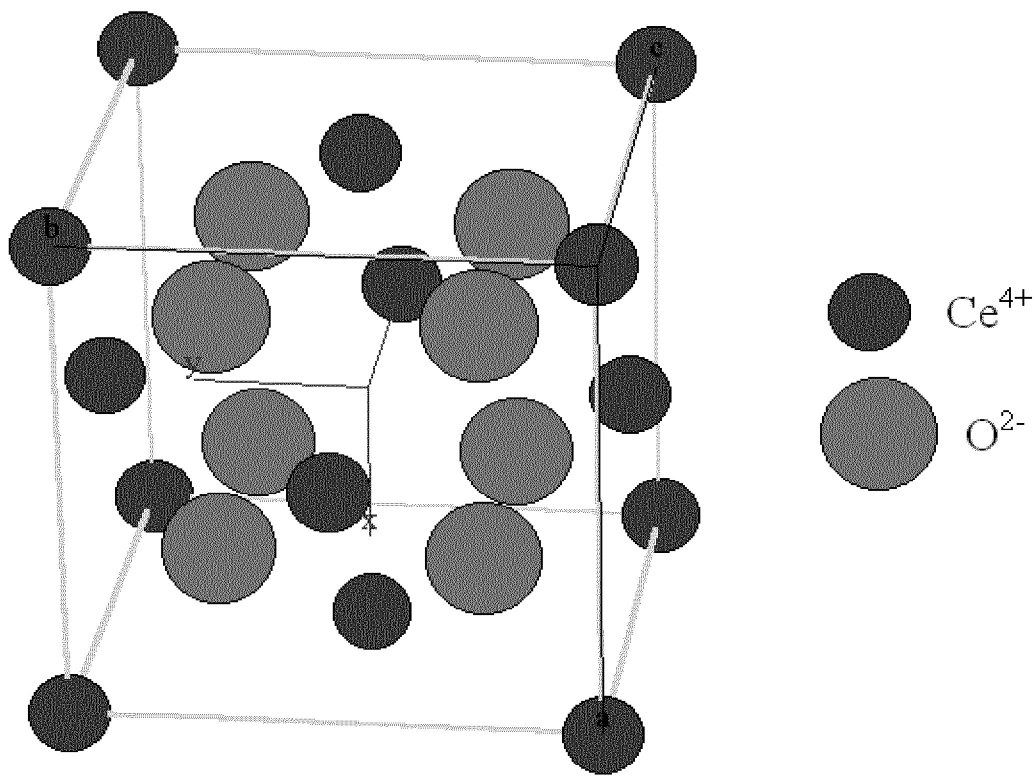

Fig. 2.a

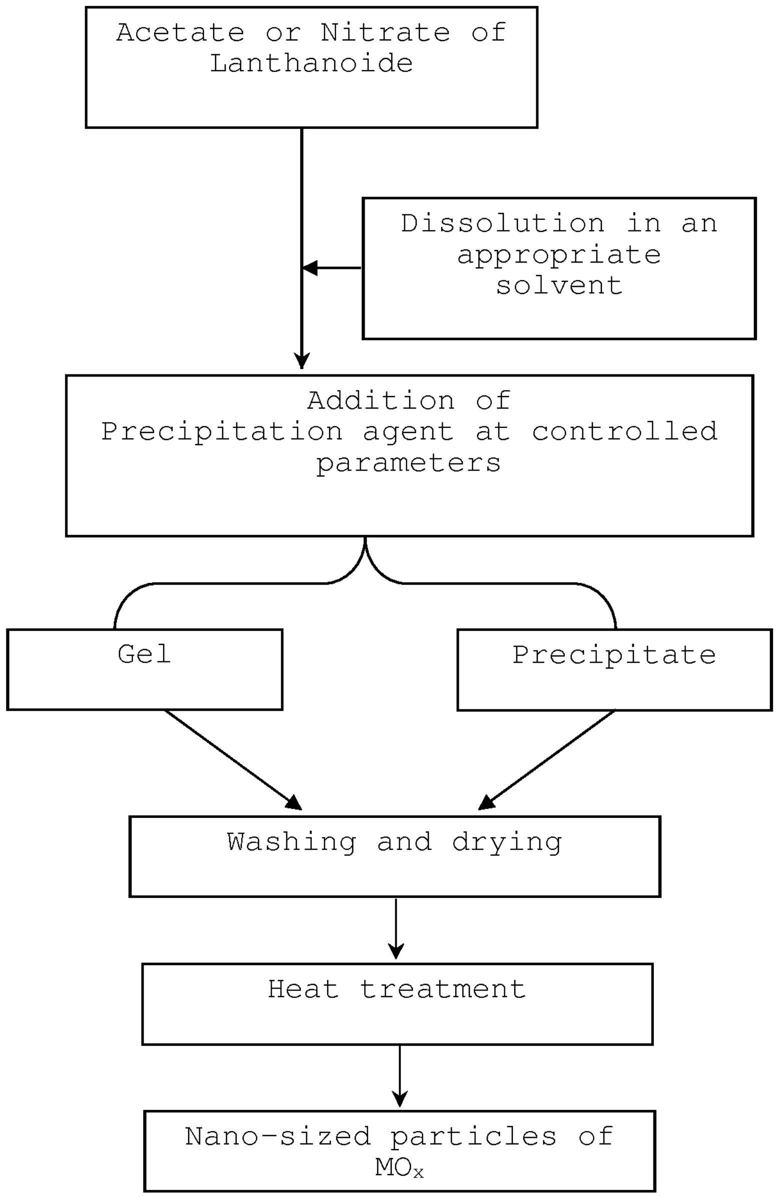
Acetate or Nitrate of Lanthanoide
Dissolution in an appropriate solvent
Addition of Precipitation agent at controlled parameters
Gel
Precipitate
Washing and drying
Heat treatment
Nano-sized particles of $MO_x$

Fig. 2.b

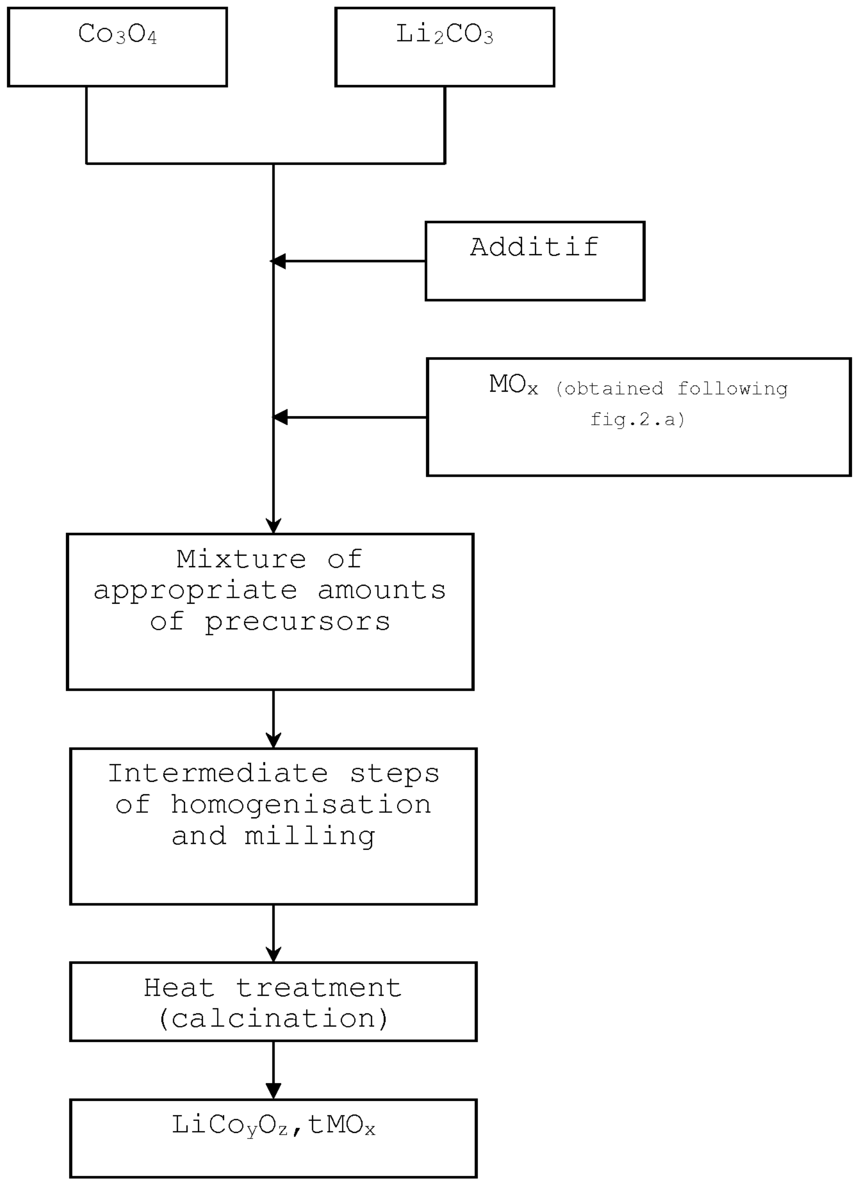
Co3O4
Li2CO3
Additif
MOx (obtained following fig.2.a)
Mixture of appropriate amounts of precursors
Intermediate steps of homogenisation and milling
Heat treatment (calcination)
LiCoyOz,tMOx

**Fig. 3**

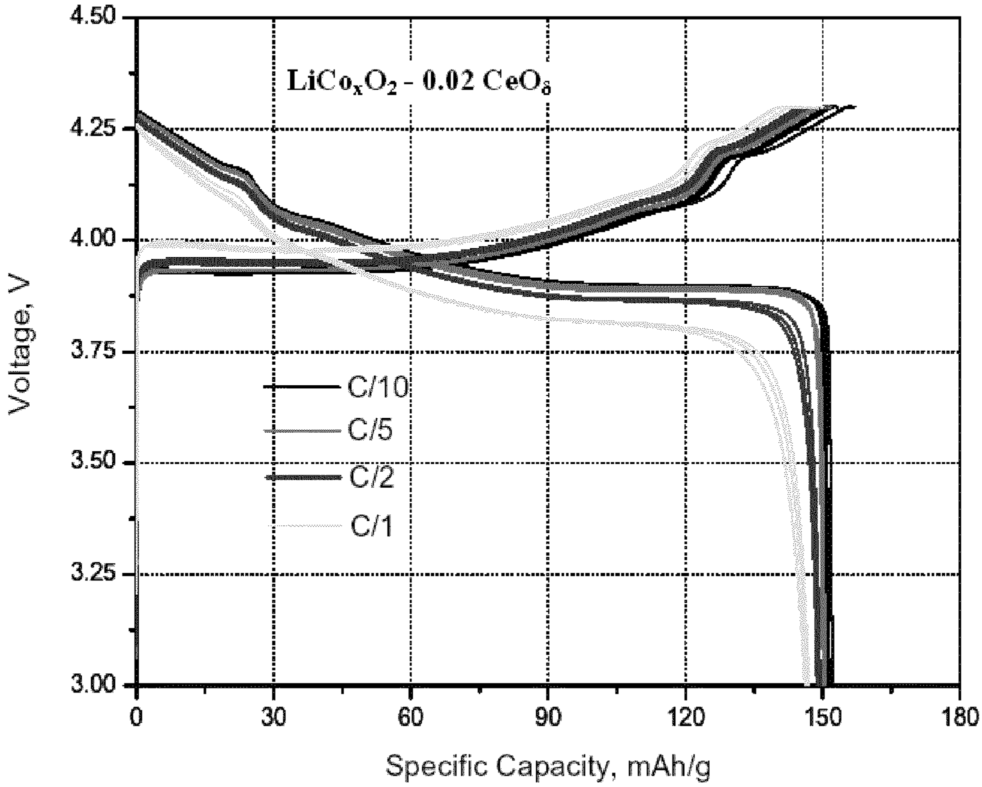
$LiCo_xO_2$ - 0.02 $CeO_\delta$
4.50
4.25
4.00
3.75
3.50
3.25
3.00
Voltage, V
C/10
C/5
C/2
C/1
0
30
60
90
120
150
180
Specific Capacity, mAh/g

Fig. 4

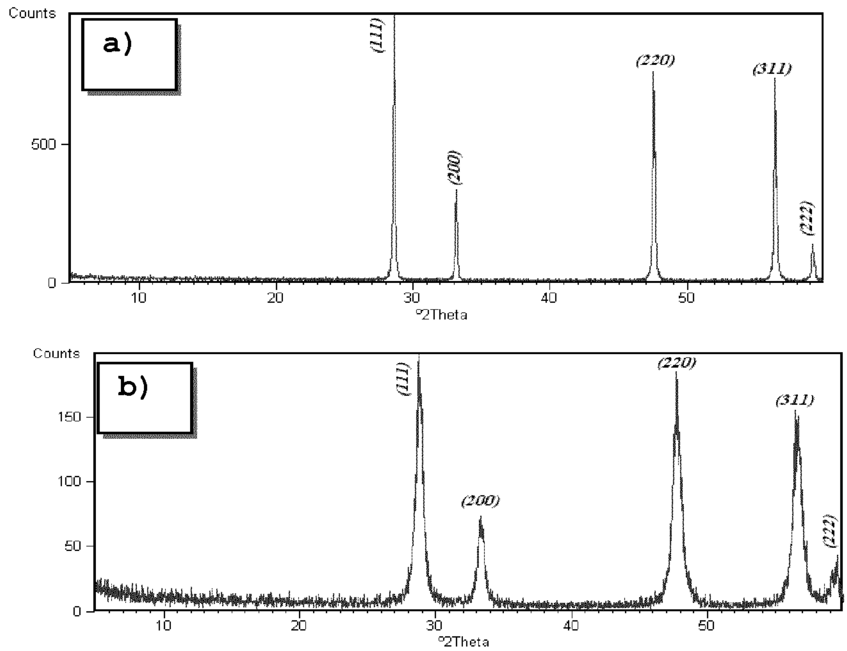
Counts
a)
500
0
(111)
(200)
(220)
(311)
(222)
10
20
30
40
50
°2Theta
Counts
b)
150
100
50
0
(111)
(200)
(220)
(311)
(222)
10
20
30
40
50
°2Theta

Fig. 5

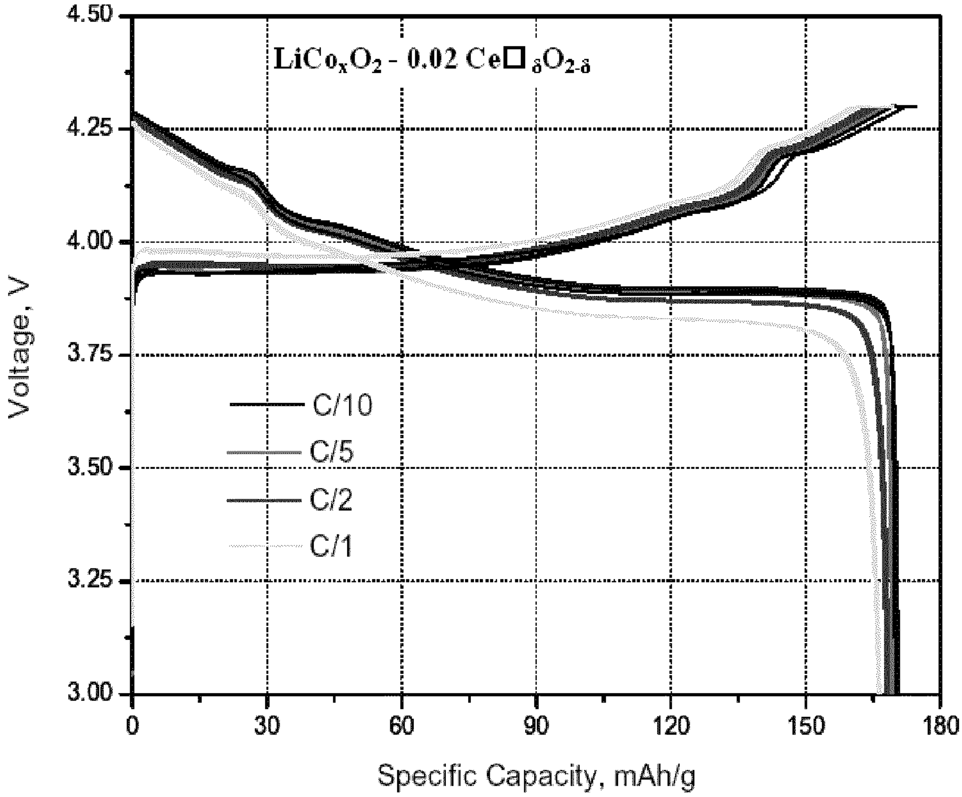
LiCo$_x$O$_2$ - 0.02 Ce□$_\delta$O$_{2-\delta}$
4.50
4.25
4.00
3.75
3.50
3.25
3.00
Voltage, V
C/10
C/5
C/2
C/1
0
30
60
90
120
150
180
Specific Capacity, mAh/g

**Fig. 6**

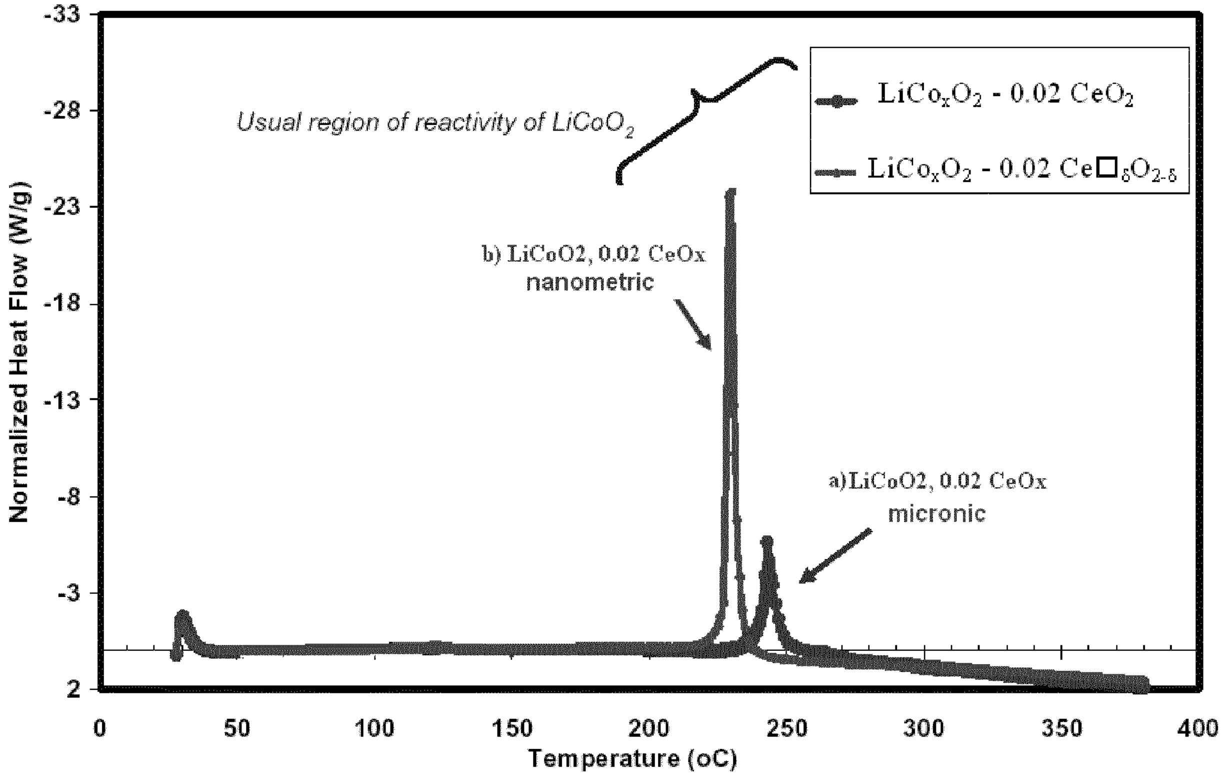
-33
-28
-23
-18
-13
-8
-3
2
Normalized Heat Flow (W/g)
0
50
100
150
200
250
300
350
400
Temperature (oC)
Usual region of reactivity of $LiCoO_2$
$LiCo_xO_2$ - 0.02 $CeO_2$
$LiCo_xO_2$ - 0.02 Ce□$_\delta O_{2-\delta}$
b) LiCoO2, 0.02 CeOx
nanometric
a)LiCoO2, 0.02 CeOx
micronic

Fig. 7

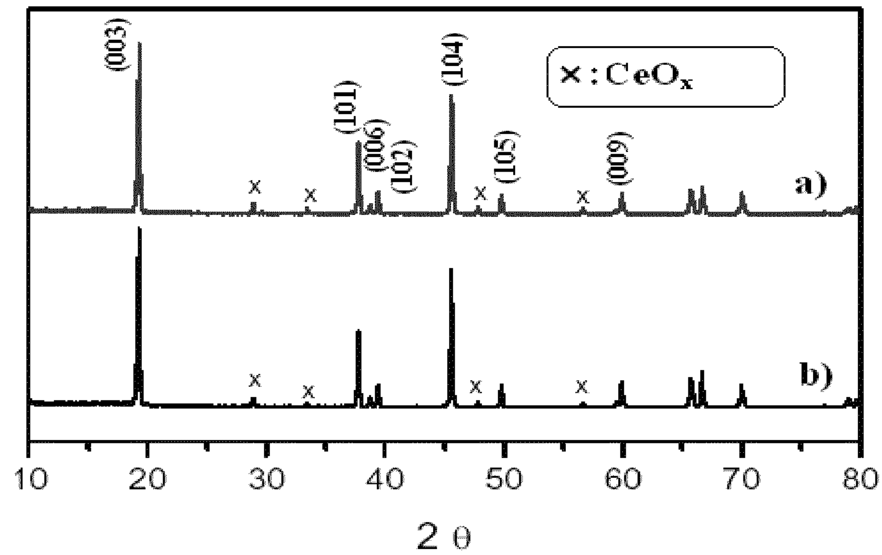

Fig.8

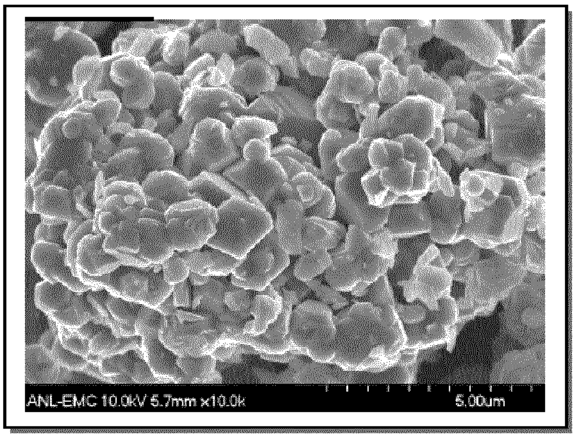
ANL-EMC 10.0kV 5.7mm x10.0k
5.00um

Fig. 9

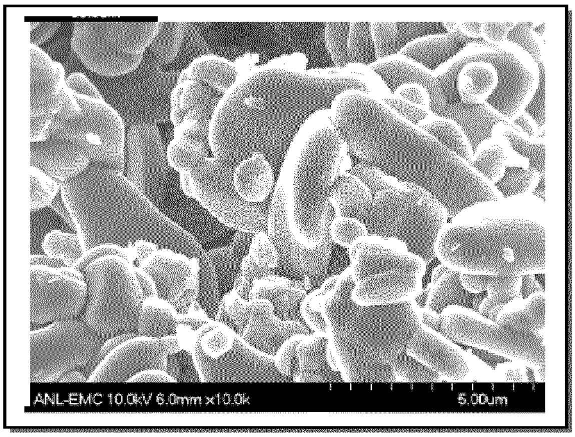
ANL-EMC 10.0kV 6.0mm x10.0k
5.00um

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6200704 B, Katz
- US 6589499 B, Gao
- US 6103213 A, Nakamura
- US 5964902 A, Mao
- JP 10001316 A
- US 6420062 B1, PROHASKA ARMIN
- US 7192539 B
- JP 8171755 A, A. Masashi
- US 6749648 B, Kumar


### Non-patent literature cited in the description


- **NEEDHAM, S.A.** *Synthesis and electrochemical performance of doped LiCoO2 materials*
- **S.A.NEEDHAM et al.** Synthesis and electrochemical performance of doped LiCoO2 materials. *Journal of Power Sources,* 2007
- **A.LUNDBLAD ; B.BERGMAN.** Synthesis of LiCoO2 starting from carbonate precursors. *Solid State Ionics,* 1997, vol. 96, 173-181
- **E.ANTOLINI et al.** Synthesis and Thermal Stability of LiCoO2. *Journal of Solid State Chemistry,* 1995, vol. 117, 1-7
- **SERK-WON JANG et al.** Synthesis and electrochemical of LixCoO2 for lithium - ion batteries. *Materials and Research Bulletin,* 2003, vol. 38, 1-9
- **M.MOGENSEN ; N.SAMMES ; G.A.TOMPSETT.** Physical, chemical and electrochemical properties of pure and doped ceria. *Solid State Ionics,* 2000, vol. 129, 63-94
- **STÉPHANE LEVASSEUR.** *Doctoral dissertation,* 2001
- **T.ZHU ; L.KUNDAKOVIC ; A.DREHER ; M.F.STEPHANOPOULOS.** Redox chemistry over CeO2-based catalysts: SO2 reduction by CO or CH. *Catalysis Today,* 1999, vol. 50, 381-397
- **A.TROVARELLI.** Catalytic Properties of Ceria and CeO2-Containing Materials. *Rev,* 1996, vol. 38, 439-450
- **S.M.LALA et al.** Synthesis of LiCoO2 by metallo-organic decomposition-MOD. *Journal of Power Sources,* 2003, vol. 114, 127-132
- **DONG ZHANG et al.** *Journal of Power Sources,* 1999, vol. 83, 121-127
- **I.AKALAY et al.** *J. Chem. Soc., Faraday Trans. 1,* 1987, vol. 83, 1137-1148
- **K. OUZAOUIT.** *Journal de Physique IV,* 2005, vol. 123 (1), 125-130
- **Y-K.SUN ; S-W.CHO ; S-T.MYUNG ; K.AMINE ; JAI.PRAKASH.** *Electrochimica Acta,* 2007, vol. 53, 1013-1019
- **N.G.MILLOT.** *thesis,* 1998
- **MULLER, C.** *thesis,* 1996
- **S. SAITZEK.** *Thesis,* 2003